# EUROPÄISCHE PATENTSCHRIFT

(11) **EP 1 356 727 B1**
(45) Veröffentlichungstag und Bekanntmachung des Hinweises auf die Patenterteilung: **19.04.2006**
(21) Anmeldenummer: 03000703.3
(22) Anmeldetag: 13.01.2003
(51) Int. Cl.: A01K 15/02

(54) **Freilaufführungsanlage zum Trainieren von Tieren entlang einer definierten Laufbahn**
Device for walking and training animals along a defined track
Installation à promener et à entraîner des animaux le long d'une piste définie

(30) Priorität: 31.10.2002 DE 10251638
(43) Veröffentlichungstag der Anmeldung: 29.10.2003
(73) Patentinhaber: Uwe Kraft Reitsportgeräte und Metallbau GmbH, 74586 Frankenhardt-Honhardt (DE)
(72) Erfinder: Kraft, Uwe, 74586 Honhardt (DE); Kraft, Frank, 74586 Honhardt (DE)
(74) Vertreter: Duhme, Torsten

(56) Entgegenhaltungen:
- DE-A- 19 954 469
- FR-A- 2 301 280
- US-A- 3 349 751

## Beschreibung

Die vorliegende Erfindung betrifft eine Freilaufführungsanlage zum Trainieren von Tieren entlang einer definierten Laufbahn, insbesondere zum Trainieren von Pferden oder Kamelen, mit einer Anzahl von Führungselementen, die an einer Tragkonstruktion beweglich angeordnet sind, wobei eine Bewegungsbahn der Führungselemente die Laufbahn definiert, wobei die Tragkonstruktion zumindest eine feststehende Laufschiene beinhaltet, an der zumindest ein Laufwagen beweglich angeordnet ist, wobei die Führungselemente mit dem zumindest einen Laufwagen verbunden sind, wobei der zumindest eine Laufwagen mit einem Zugelement verbunden ist, wobei ein Antrieb vorhanden ist, mit dem das Zugelement bewegbar ist, und wobei das Zugelement eine Kette mit einer Vielzahl von in sich steifen, jedoch gelenkig miteinander verbundenen Kettengliedern ist.

Eine solche Freilaufführungsanlage ist beispielsweise aus FR 2 301 280 A bekannt.

Bei einer Freilaufführungsanlage handelt es sich um eine Anlage, mit der Pferde oder auch andere Tiere ähnlich wie beim Longieren auf einer definierten Laufbahn bewegt werden können. Frühere Freilaufführungsanlagen waren dazu in einer Art Karusselltechnik realisiert. Die Freilaufführungsanlage besaß einen zentralen Drehantrieb, der an radial nach außen ragenden Tragarmen Führungselemente, häufig in Form von Führungsgittern, besaß. Die Führungsgitter überstrichen im Betrieb der Anlage eine Kreisbahn, auf der die Tiere somit geführt wurden. In aller Regel war die Kreisbahn rechts und links von den Tieren noch durch Zäune begrenzt, so dass sich die Tiere gewissermaßen in einem umlaufenden "Käfig" oder "Käfigabschnitt" befanden. Ein Beispiel einer solchen Freilaufführungsanlage ist in der DE 28 52 777 A1 beschrieben.

Die Karussellkonstruktion ist mit zunehmender Anlagengröße relativ schwerfällig, da die weit außen stehenden Führungselemente eine große Last für den zentralen Drehantrieb darstellen. Selbst mit einem stark dimensionierten Elektromotor lassen sich nur vergleichsweise geringe Beschleunigungen und Verzögerungen der Führungselemente erreichen. Auf Grund der schweren Konstruktion werden dabei zudem die Lager und Kupplungen stark belastet, was zu einem entsprechenden Verschleiß und Wartungsaufwand führt.

Zur Vermeidung dieser Nachteile ist in DE 197 46 562 C1 eine Freilaufführungsanlage beschrieben, bei der die Führungselemente, beispielsweise fünf an der Zahl, an einem gemeinsamen Profilring aufgehängt sind. Der Profilring wird von Stütz- bzw. Führungsrollen getragen und im Betrieb der Anlage in eine umlaufende Kreisbewegung versetzt. Letzteres erfolgt insbesondere dadurch, dass an dem Führungsring ferner eine Antriebsrolle angreift, die mit einem Antrieb verbunden ist. Da bei dieser Art der Konstruktion die Last nicht in einem einzigen zentralen Punkt zusammenläuft, kann die Anlage insgesamt leichter und damit auch dynamischer realisiert werden.

In der EP 1 216 613 A1 sind weitere Ausführungsformen und Details einer Freilaufführungsanlage der zuletzt genannten Art beschrieben. Durch eine besondere Art der Aufhängung des Profilrings sollen dabei die Dynamik und Laufruhe der Anlage verbessert werden.

Die eingangs genannte FR 2 301 280 A offenbart eine Führungsanlage mit zwei feststehenden Laufschienen, auf denen schienenübergreifende Wagen bewegt werden. Die einzelnen Laufwagen werden über einen Reibradmechanismus angetrieben. Jeder Laufwagen besitzt eine vertikal nach oben führende Konstruktion, an deren freiem Ende eine Stange angeordnet ist, die sich über die gesamte Länge des Laufwagens und darüber hinaus erstreckt. Die einzelnen Stangen der Laufwagen sind über scharnierartige Gelenkstellen miteinander verbunden.

Aus DE 199 54 469 A1 ist eine andere Freilaufführungsanlage bekannt, bei der die Führungselemente an Laufwagen angeordnet sind, die über eine Kette miteinander verbunden sind.

US 3,349,751 zeigt schließlich eine Freilaufführungsanlage mit Laufwagen, die über ein Seil miteinander verbunden sind.

Der vorliegenden Erfindung liegt die Aufgabe zu Grunde, eine alternative Konstruktion für eine Freilaufführungsanlage anzugeben, die einen laufruhigen und dynamischen Betrieb bei geringem Verschleiß und damit Wartungsaufwand ermöglicht.

Diese Aufgabe wird durch eine Freilaufführungsanlage der eingangs genannten Art gelöst, bei der die Kettenglieder in Zugrichtung mit einer begrenzten Längsverschieblichkeit zueinander verbunden sind.

Die Führungselemente werden hiernach also mit Hilfe eines Laufwagens bewegt, der an einer feststehenden Laufschiene entlang fährt. Damit ist es möglich, Laufbahnen für die Tiere zu realisieren, die von einer Kreisform abweichen. Insbesondere lassen sich damit Laufbahnen realisieren, die gerade Streckenabschnitte beinhalten, wie nachfolgend an Hand von bevorzugten Ausführungsbeispielen näher erläutert ist.

Unabhängig davon kann mit der hier vorgeschlagenen Konstruktion ein sehr laufruhiger und dennoch sehr dynamischer Antrieb der Führungselemente realisiert werden. Die feststehende Laufschiene ermöglicht nämlich die Verwendung von vergleichsweise kleinen und damit leichten Laufwagen, so dass die insgesamt zu bewegende Masse der Anlage gegenüber der Karusselltechnik und auch gegenüber der Profilringtechnik reduziert ist. Auf Grund der geringeren bewegten Masse kann eine relativ hohe Dynamik (schnelles Beschleunigen bzw. Verzögern) mit einem vergleichsweise kleinen Antriebsmotor erreicht werden. Zudem ist die Belastung der Antriebswelle, der Lager und anderer Teile des Antriebsmechanismus auf Grund der geringen Masse reduziert, was einen verschleißärmeren und damit wartungsärmeren Betrieb ermöglicht.

Grundsätzlich ist es bei einer Freilaufführungsanlage möglich, dass jeder Laufwagen einen eigenen Antrieb besitzt. Eine solche Anordnung mit "verteilten Antrieben" ermöglicht eine besonders flexible und individuelle Steuerung der Führungselemente. Bislang wurde eine solche Flexibilität jedoch nicht benötigt, und es ist daher aus Kostengründen und vom Steuerungsaufwand her bevorzugt, wenn eine Vielzahl von Laufwagen über einen gemeinsamen Antrieb in Bewegung versetzt wird. Dies wiederum kann auf kostengünstige Weise erreicht werden, wenn die Laufwagen über ein Zugelement mit dem einen Antrieb verbunden sind. Der gemeinsame Antrieb kann grundsätzlich an einem der Laufwagen sitzen oder, was hier bevorzugt ist, feststehend montiert sein. Letzteres besitzt den Vorteil, dass Versorgungsleitungen zu dem einen Antrieb stationär verlegt werden können und keine Bewegungsreserve benötigen. Der konstruktive Aufwand und damit die Kosten der Realisierung sind geringer.

Das Zugelement ist hier eine Kette mit einer Vielzahl von in sich steifen, jedoch gelenkig miteinander verbundenen Kettengliedern, bevorzugt mit einer Vielzahl von Hohlprofil-Kettengliedern. Die Maßnahme besitzt den Vorteil, dass zumindest bis zu einem gewissen Grad auch Schubkräfte über das Zugelement übertragen werden können, wodurch die Kraft des Antriebs noch gleichmäßiger auf eine Vielzahl von Laufwagen verteilt wird. Infolgedessen können miteinander gekoppelte Führungselemente ruckfreier und gleichmäßiger beschleunigt und verzögert werden. Die Verwendung von Hohlprofil-Kettengliedern besitzt dabei den Vorteil, dass die insgesamt zu bewegende Masse weiter reduziert ist, was sich nochmals vorteilhaft auf die Dynamik und den Verschleiß der Anlage auswirkt.

Schließlich sind die Kettenglieder in Zugrichtung mit einer begrenzten Längsverschieblichkeit zueinander verbunden. In Querrichtung ist die Verbindung vorzugsweise spielfrei. Diese Ausgestaltung ermöglicht einerseits eine gute Kraftverteilung in Zugrichtung, und sie trägt daher ebenfalls zu einem besonders ruckfreien und dynamischen Antrieb bei. Durch die Beweglichkeit in Längsrichtung können die an sich starren Kettenglieder andererseits besonders laufruhig und störungsfrei auch in gekrümmten Bahnabschnitten geführt werden. Das Spiel wirkt sich dabei umso vorteilhafter aus, je länger die einzelnen Kettenglieder und je enger der Radius eines gekrümmten Bahnabschnitts sind.

In einer bevorzugten Ausgestaltung der Erfindung ist zumindest eine der Anzahl der Führungselemente entsprechende Anzahl von Laufwagen an der Laufschiene beweglich angeordnet, wobei jedes Führungselement mit zumindest einem ihm zugeordneten Laufwagen verbunden ist.

Nach dieser Ausgestaltung wird jedes Führungselement über eigene Laufwagen an der Laufschiene bewegt. Abweichend hiervon wäre es grundsätzlich auch möglich, mehrere Führungselemente an einem Laufwagen zu befestigen. Die bevorzugte Ausgestaltung besitzt demgegenüber jedoch den Vorteil, dass die bewegten Massen entlang der Laufschiene gleichmäßiger verteilt sind, was zu einer nochmals verbesserten Dynamik bzw. einem noch geringeren Verschleiß beiträgt. Zudem ist es in dieser Ausgestaltung besonders einfach möglich, Führungselemente entlang der Laufbahn zu ergänzen oder zu entfernen, so dass die Anlage insgesamt sehr flexibel an verschiedene Einsatzbedürfnisse angepasst werden kann.

In einer weiteren Ausgestaltung beinhaltet die Tragkonstruktion zwei mit Abstand parallel zueinander angeordnete Laufschienen, an denen jeweils zumindest ein Laufwagenteil beweglich angeordnet ist, wobei die zumindest zwei Laufwagenteile mit einem Kopplungselement zu einem schienenübergreifenden Laufwagen verbunden sind.

Durch diese Maßnahme wird eine besonders ausgeglichene Lastverteilung und infolgedessen eine besonders laufruhige Konstruktion erreicht. Alternativ hierzu ist es jedoch grundsätzlich auch möglich, die Laufwagen an nur einer einzelnen Laufschiene entlang fahren zu lassen. Eine solche Anordnung erfordert vor allem bei der Installation einen geringeren Montage- und Materialaufwand und ist damit kostengünstiger.

In einer weiteren Ausgestaltung der zuvor genannten Maßnahme trägt das Kopplungselement das Führungselement.

Durch diese Maßnahme wird das Führungselement, vorzugsweise ein an sich bekanntes Führungsgitter, zwischen den beiden Laufwagenteilen gehalten, was eine besonders stabile Konstruktion darstellt und einen besonders laufruhigen Betrieb ermöglicht.

In einer weiteren Ausgestaltung besitzen die Kettenglieder einen im wesentlichen rechteckförmigen Querschnitt.

Diese Maßnahme ermöglicht den besonders effizienten Einsatz eines Reibradantriebes zum Antreiben der Kette und der Laufwagen. Auf Grund des rechteckförmigen Querschnitts kann das Reibrad besonders wirkungsvoll an den einzelnen Kettengliedern angreifen. Gleichzeitig wird auf diese Weise die Laufruhe der Anlage weiter gesteigert.

In einer weiteren bevorzugten Ausgestaltung besitzen die einzelnen Kettenglieder eine Länge im Bereich von etwa 0,2 m bis 5 m, bevorzugt im Bereich von etwa 3,5 m.

In dieser bevorzugten Ausgestaltung handelt es sich bei dem Zugelement um eine Gliederanordnung mit relativ langen, gelenkig miteinander verbundenen Gliederstäben. Je länger die einzelnen (Ketten-)Glieder sind, desto weniger Gelenkverbindungen werden benötigt und desto geringer sind Reibungsverluste und Verschleiß im Betrieb der Anlage. Zudem wird insbesondere bei Verwendung eines Reibradantriebes die Laufruhe und Effizienz der Anlage nochmals verbessert. Die besonders bevorzugte Größenordnung von etwa 3,5 m Gliederlänge besitzt den vorteil, dass pro Kettenglied ein Führungselement befestigt und bewegt werden kann, was auf Grund der gleichmäßigen Lastverteilung zu einer nochmals verbesserten Laufruhe und Dynamik beiträgt. Es versteht sich jedoch, dass die angegebenen Größenordnungen nicht "maßgenau" eingehalten werden müssen und im Einzelfall auf die Abmessungen der konkreten Gesamtanlage abgestimmt werden können.

In einer weiteren Ausgestaltung ist die Kette im Bereich ihrer Gelenkstellen mit einer Vielzahl von Laufwagen verbunden, wobei vorzugsweise an jeder Gelenkstelle ein Laufwagen befestigt ist.

Diese Maßnahme ermöglicht es auf konstruktiv einfache und damit kostengünstige weise, die Stabilität der Antriebsanordnung weiter zu steigern, was sich wiederum positiv auf die Laufruhe und Dynamik der Anlage auswirkt. Indem die Laufwagen vor allem im Bereich der Gelenkstellen an der Kette befestigt werden, lassen sich die "empfindlichen" Gelenkstellen sehr gut gegen Schwerkraftbelastung und andere Einflüsse abstützen.

In einer weiteren Ausgestaltung ist die Bewegungsbahn der Führungselemente eine umlaufende Bewegungsbahn mit zumindest streckenweise geradlinigen Abschnitten.

Diese Ausgestaltung ermöglicht ein abwechslungsreicheres Training und sie bietet insbesondere in einer Trainingshalle die Möglichkeit, den zur verfügung stehenden Platz optimal auszunutzen.

Ausführungsbeispiele der Erfindung sind in der Zeichnung dargestellt und werden in der nachfolgenden Beschreibung näher erläutert. Es zeigen:
- Fig. 1: eine schematische Darstellung eines Ausführungsbeispiels der neuen Freilaufführungsanlage in einer Draufsicht von oben,
- Fig. 2: die Trag- und Antriebskonstruktion der Freilaufführungsanlage aus Fig. 1 in einer teilweise schematisierten Darstellung,
- Fig. 3: eine vergrößerte Detaildarstellung der Trag- und Antriebskonstruktion aus Fig. 2,
- Fig. 4: die Gelenkstelle des bei der Antriebskonstruktion in Fig. 3 verwendeten Zugelements in einer Querschnittsdarstellung,
- Fig. 5: die Gelenkstelle aus Fig. 4 in einer Draufsicht von oben,
- Fig. 6: eine schematische Darstellung des Laufwagens bei der Antriebskonstruktion gemäß Fig. 2 und 3,
- Fig. 7: eine alternative Trag- und Antriebskonstruktion gemäß einem weiteren Ausführungsbeispiel der neuen Freilaufführungsanlage, und
- Fig. 8: ein Laufwagenteil der Antriebskonstruktion in Fig. 7 in einer Seitenansicht.

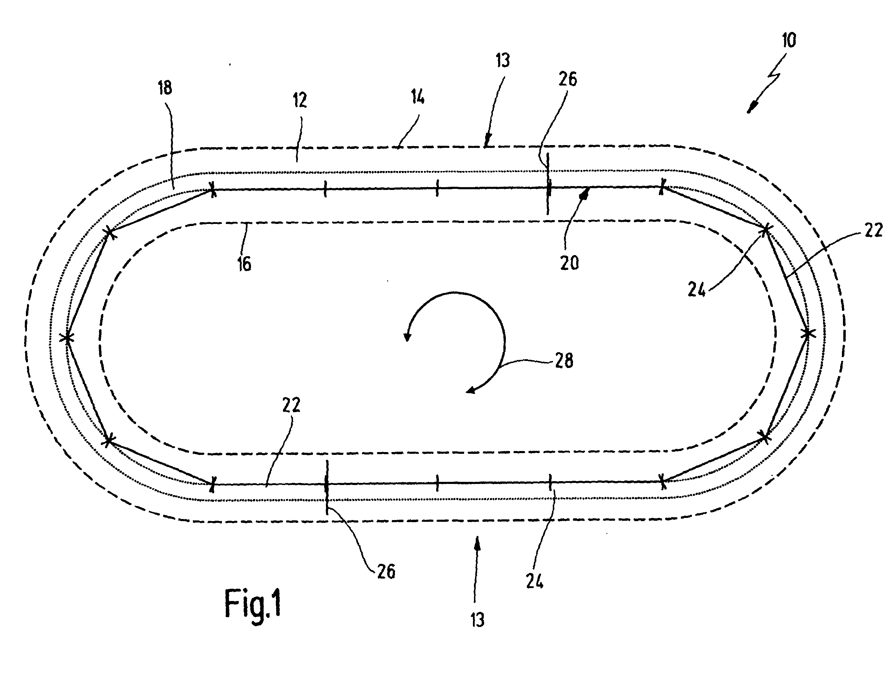

In Fig. 1 ist ein Ausführungsbeispiel der neuen Freilaufführungsanlage in seiner Gesamtheit mit der Bezugsziffer 10 bezeichnet.

Die Freilaufführungsanlage 10 besitzt eine in sich geschlossene Laufbahn 12, die abweichend von bislang bekannten Konstruktionen erstmals gerade Streckenabschnitte 13 beinhaltet. Radial nach innen und radial nach außen ist die Laufbahn 12 jeweils durch einen Zaun 14, 16 umgrenzt. Die Zäune 14, 16 sind jedoch für die Realisierung der vorliegenden Erfindung nicht zwingend erforderlich. Mit der Bezugsziffer 18 ist eine an die. Form der Laufbahn 12 angepasste Laufschiene dargestellt, die hier annähernd zentrisch über der Laufbahn 12 angeordnet ist. An der Laufschiene 18 sind in nachfolgend näher beschriebener Weise mehrere Laufwagen angeordnet, an denen Führungselemente für Pferde, Kamele und dergleichen beweglich aufgehängt sind. Die einzelnen Laufwagen (hier nicht dargestellt) werden über eine Kette 20 angetrieben, die in einem bevorzugten Ausführungsbeispiel aus insgesamt sechzehn in sich steifen, jedoch gelenkig miteinander verbundenen Kettengliedern 22 besteht. Die Länge jedes einzelnen Kettengliedes 22 beträgt hier etwa 3,5 m.

Die Gelenkstellen, an denen die einzelnen Kettenglieder 22 zu der umlaufenden Kette 20 miteinander verbunden sind, sind hier schematisch mit Hilfe von kleinen Querstrichen angedeutet und mit der Bezugsziffer 24 bezeichnet. Wie in Fig. 1 dargestellt ist, verläuft die Kette 20 in diesem Ausführungsbeispiel radial auf der Innenseite der geschlossenen Laufschiene 18, und sie folgt - soweit angesichts der starren Kettenglieder 22 möglich - der Form der umlaufenden Laufschiene 18.

Mit der Bezugsziffer 26 sind hier beispielhaft zwei Führungselemente in Form von Führungsgittern bezeichnet, die an der Kette 20 in nachfolgend noch näher erläuterter Weise befestigt sind. Im bevorzugten Ausführungsbeispiel ist an jeder Gelenkstelle 24 der Kette 20 ein Führungselement 26 befestigt. Die Freilaufführungsanlage 10 kann jedoch auch mit einer geringeren oder auch höheren Zahl von Führungselementen 26 betrieben werden.

Mit Hilfe der Kette 20 werden die Führungselemente 26 in Richtung des Pfeils 28 in einer umlaufenden Bahn bewegt. In Kombination mit den beiden seitlichen Zäunen 14, 16 bilden die Führungselemente 26 dabei einen sich bewegenden Laufbereich, in dem ein Pferd, ein Kamel oder dergleichen geführt werden kann.

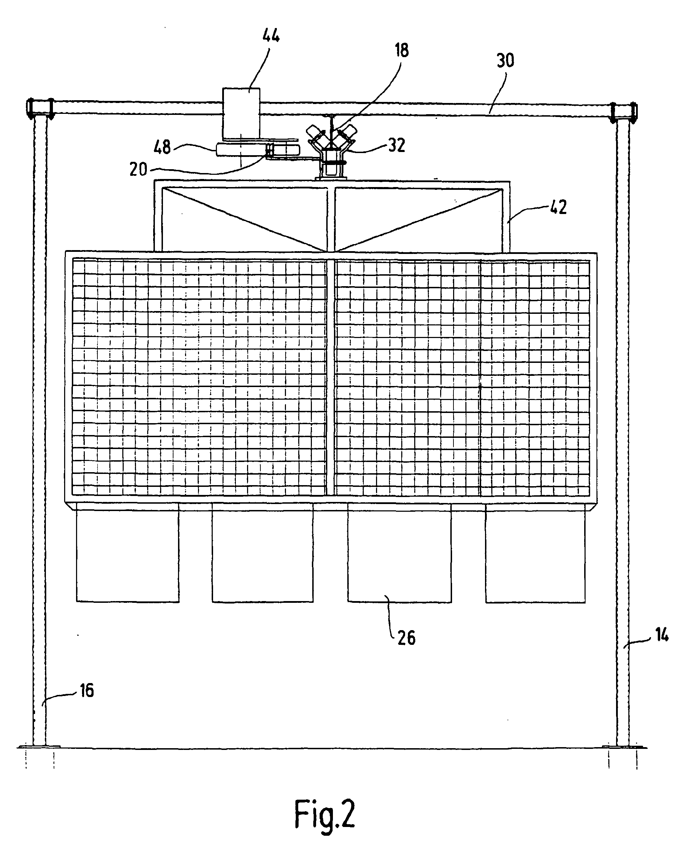

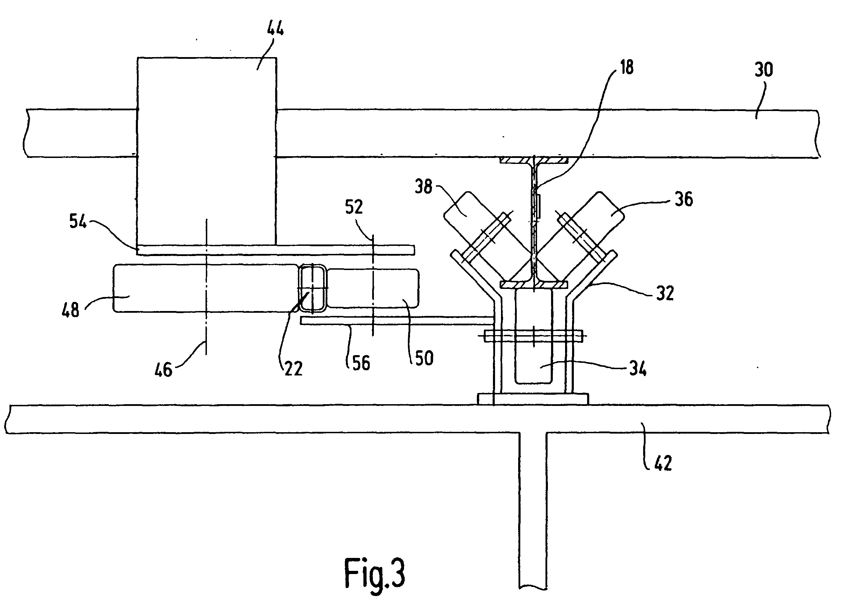

Fig. 2 und 3 zeigen die Trag- und Antriebskonstruktion der Freilaufführungsanlage 10 an Hand eines einzelnen Führungselements 26. Gleiche Bezugszeichen bezeichnen dabei dieselben Elemente wie zuvor.

Die Laufschiene 18 ist bei diesem Ausführungsbeispiel ein im Querschnitt I-förmiger Stahlträger (Doppel-T-Träger), der nach unten freihängend an einer Reihe von Querträgern 30 befestigt ist, beispielsweise angeschweißt ist. Die Querträger 30 werden rechts und links von Pfosten gehalten, die hier Bestandteil der Zäune 14, 16 der Freilaufführungsanlage 10 sind. Alternativ hierzu könnte die Laufschiene 18 jedoch beispielsweise auch am Dach einer Trainingshalle oder an anderweitig abgestützten Querträgern 30 befestigt sein.

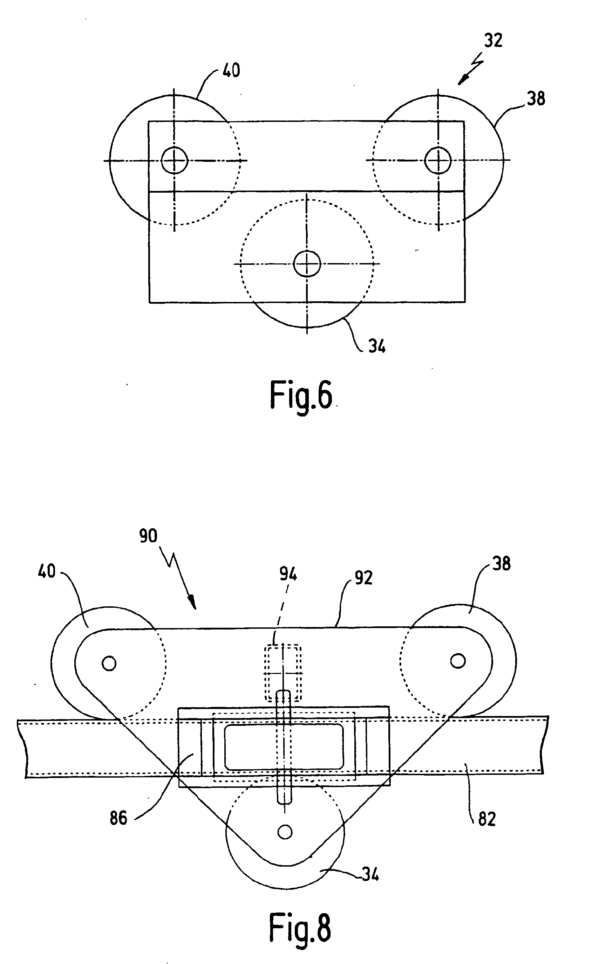

Der hier mit der Bezugsziffer 32 bezeichnete Laufwagen besitzt insgesamt fünf Laufräder, von denen in der vorliegenden Darstellung drei Laufräder 34, 36, 38 zu sehen sind. Die drei genannten Laufräder sind Y-förmig zueinander angeordnet und umgreifen sternförmig das untere freie Ende der I-förmigen Laufschiene 18. Dabei arbeitet das Laufrad 34 als Gegendruckrolle, während die beiden Laufräder 36, 38 die eigentliche Traglast aufnehmen. In Richtung der Zeichenebene nach hinten versetzt befinden sich zwei weitere Laufräder in gleicher Ausrichtung wie die Laufräder 36, 38, wie dies in der schematisierten Seitenansicht des Laufwagens 32 in Fig. 6 dargestellt ist. Eines der beiden in den Fig. 2 und 3 nicht sichtbaren hinteren Laufräder ist dort mit der Bezugsziffer 40 bezeichnet.

Am unteren Ende des Laufwagens 32 ist über ein Gestänge 42 das Führungsgitter 26 befestigt. Dies kann durch Anschweißen, Anschrauben oder jede andere hinreichend stabile Verbindung erfolgen. Insgesamt ist das Führungsgitter 26 damit über den Laufwagen 32 beweglich an der Laufschiene 18 aufgehängt. Anders ausgedrückt kann das Führungsgitter 26 über den Laufwagen 32 an der Laufschiene 18 entlang fahren und auf diese Weise die durch die Laufschiene 18 vorgegebene Laufbahn 12 entlang fahren.

Mit der Bezugsziffer 44 ist ein Antrieb bezeichnet, der hier in Form eines Elektromotors realisiert ist. Der Elektromotor 44 gibt seine Antriebskraft über eine hier nur schematisch dargestellte Achse 46 an ein Reibrad 48 ab, das gewissermaßen liegend neben dem Laufwagen 32 angeordnet ist. Mit der Bezugsziffer 50 ist eine Gegendruckrolle bezeichnet, die an einer zweiten Achse in einem definierten Abstand zum Reibrad 48 gelagert ist. Zwischen dem Reibrad 48 und der Gegendruckrolle 50 verläuft die Kette 20, von der hier eines der Kettenglieder 22 im Querschnitt dargestellt ist.

Gemäß einem bevorzugten Ausführungsbeispiel besitzen die Kettenglieder 22 einen in etwa rechteckförmigen Querschnitt, so dass das Reibrad 48 und die Gegendruckrolle 50 auf zwei gegenüberliegenden Seiten mit einer möglichst großen Reibfläche angreifen können. Hierdurch wird eine gute Übertragung der Antriebskraft auf die Kette 20 erreicht.

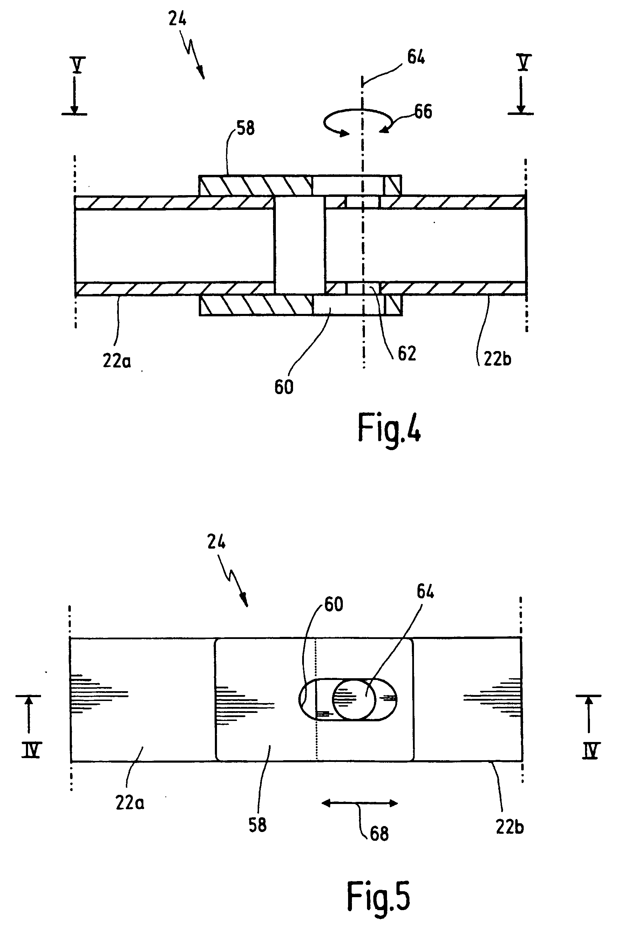

Der Motor 44, das Reibrad 48 und die Gegendruckrolle 50 sind über eine Montageplatte 54 zu einer Antriebseinheit verbunden. Diese Antriebseinheit befindet sich an einer beliebigen Stelle entlang der Umlaufbahn der Kette 20 (siehe Fig. 1). Die zwischen dem Reibrad 48 und der Gegendruckrolle 50 laufende Kette 20 ist über eine Verbindungsplatte 56 mit dem Laufwagen 32 verbunden. Bevorzugt ist die Verbindungsplatte 56 im Bereich der Gelenkstelle 24 zwischen zwei Kettengliedern 22 mit einem Gelenkelement (hier nicht dargestellt) der Kette 20 verschweißt (wird nachfolgend an Hand Fig. 4 näher erläutert). Grundsätzlich kann die Kette 22 jedoch auch auf andere Weise mit dem Laufwagen 32 verbunden sein.

Jedes Führungselement 26 ist hier in der dargestellten Weise mit einem eigenen Laufwagen 32 verbunden. Bei der Freilaufführungsanlage 10 gemäß Fig. 1 sind dementsprechend beispielsweise bis zu 16 Führungselemente 26 mit der umlaufenden Kette 20 verbunden. Dabei befindet sich an jeder Gelenkstelle 24 ein Laufwagen 32. Es versteht sich jedoch, dass die Freilaufführungsanlage 10 auch mit einer geringeren Anzahl von Führungselementen 26 betrieben werden kann, wobei dann vorzugsweise trotzdem an jeder Gelenkstelle 24 ein Laufwagen 32 an der Kette 20 angeordnet ist.

Die Verbindung der einzelnen Kettenglieder 22 im Bereich der Gelenkstellen 24 wird in der Darstellung in den Fig. 4 und 5 erkennbar.

Ein erstes Kettenglied 22a besitzt an seinem hier rechten Ende ein U-förmiges Maulteil 58, das beispielsweise durch Anschweißen von zwei entsprechenden Platten an das Ende des Kettengliedes 22a realisiert ist. Mit dem Maulteil 58 umgreift das Kettenglied 22a das in den Figuren 4 und 5 rechts liegende Ende des nächsten Kettengliedes 22b. Das Maulteil 58 und das Ende des Kettengliedes 22b besitzen zueinander fluchtende Bohrungen 60, 62, durch die zum Verbinden der Kettenglieder 22a, 22b ein Bolzen 64 gesteckt ist. Damit kann sich das Kettenglied 22b in Richtung des Pfeils 66 gegenüber dem Kettenglied 22a bewegen. Die beiden Kettenglieder 22a, 22b sind gelenkig miteinander verbunden.

Um genügend Bewegungsspielraum in Schwenkrichtung 66 zu haben, ist das Maulteil 58 bevorzugt so lang ausgebildet, dass die beiden einander gegenüberstehenden Enden der Kettenglieder 22a, 22b einen Abstand voneinander aufweisen. Des Weiteren ist die Bohrung 60 im Maulteil 58 hier als Langloch in Zugrichtung der Kette ausgebildet, wie in Fig. 5 dargestellt. Hierdurch kann sich das Kettenglied 22b in Richtung des Pfeils 68, d.h. mit etwas Spiel gegenüber dem Kettenglied 22a bewegen. Durch diese Ausbildung wird ein besonders ruckfreier und ruhiger Bewegungsablauf auch in den gekrümmten Bereichen der Bewegungsbahn der Kette 20 erreicht.

Gemäß einem bevorzugten Ausführungsbeispiel ist die Verbindungsplatte 56 am unteren Ende des Maulteils 58 angeschweißt (hier nicht dargestellt), wodurch das Kettenglied 22a eine starre Verbindung mit dem Laufwagen 32 erhält. Das Kettenglied 22b ist in gleicher Weise mit dem nächstfolgenden Laufwagen starr verbunden. Auf diese Weise ist die Kette 20 hier an jeder Gelenkstelle 24 durch einen Laufwagen 32 abgestützt, was eine besonders stabile und laufruhige Anordnung ergibt.

Der hier beschriebene Antrieb der Laufwagen 32 mit der Kette 20 hat sich bei praktischen Versuchen als äußerst effektiv erwiesen, um einen laufruhigen und dynamischen Antrieb der Führungselemente 26 zu erreichen. Diese Art der Kette 20 stellt daher ein besonders bevorzugtes Ausführungsbeispiel dar. Abweichend hiervon können die Laufwagen 32 jedoch auch über eine konventionelle Kette, beispielsweise in Kombination mit einem Zahnradantrieb, über einen Zahnriemen oder auch über andere geeignete Zugelemente miteinander verbunden und angetrieben werden. Des Weiteren kann die Länge der einzelnen Kettenglieder 22 abweichend von dem hier bevorzugten Ausführungsbeispiel auch kürzer oder länger gewählt werden. Kürzere Kettenglieder 22 sind insbesondere vorteilhaft, wenn eine kreisförmige Laufbahn 12 mit vergleichsweise geringem Radius realisiert werden soll.

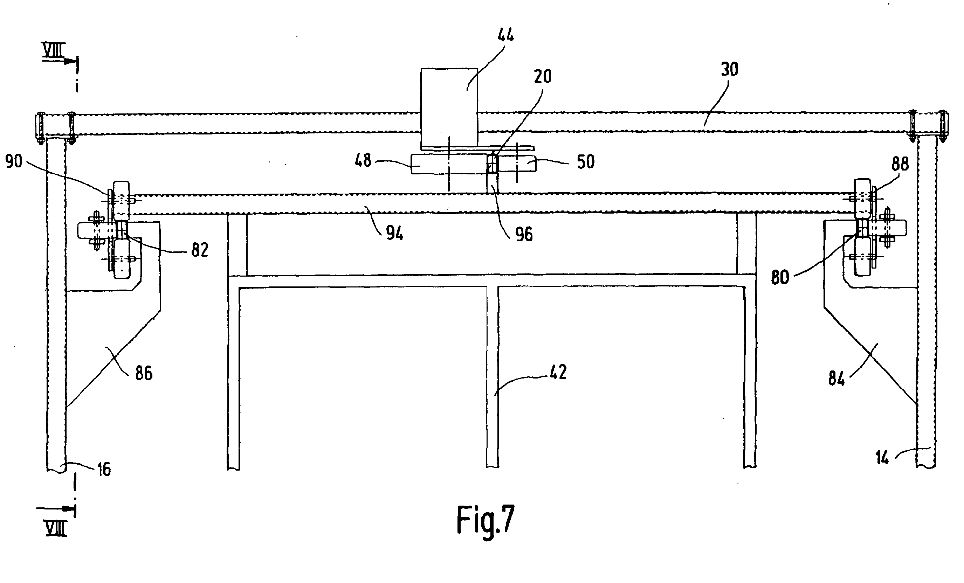

Es versteht sich, dass darüber hinaus auch die Anzahl und konkrete Ausbildung der Laufwagen 32 gegenüber dem hier gezeigten Ausführungsbeispiel variiert werden kann. Eine besonders bevorzugte Variante ist nachfolgend an Hand der Fig. 7 und 8 dargestellt. Gleiche Bezugszeichen bezeichnen dabei weiterhin dieselben Elemente wie zuvor.

In dem Ausführungsbeispiel gemäß Fig. 7 beinhaltet die Freilaufführungsanlage zwei parallel zueinander angeordnete Laufschienen 80, 82, die jeweils am oberen freien Ende eines Trägers 84, 86 abgestützt sind. Die Träger 84, 86 sind ihrerseits an Pfosten der seitlichen Zäune 14, 16 montiert. Die Laufschienen 80, 82 besitzen hier in diesem Ausführungsbeispiel einen etwa rechteckförmigen Querschnitt. Sie können alternativ jedoch auch mit anderem Querschnitt realisiert sein.

Auf jeder der beiden Laufschienen 80, 82 ist ein Laufwagenteil 88, 90 beweglich angeordnet. Die Seitenansicht des Laufwagenteils 90 ist beispielhaft in Fig. 8 dargestellt. Wie dort zu erkennen ist, besitzt jedes Laufwagenteil 88, 90 hier drei Laufräder 34, 38, 40, die über einen Rahmen 92 miteinander verbunden sind. Das Laufrad 34 arbeitet wiederum als Gegendruckrolle, während die Laufräder 38, 40 die Last des Führungselements 26 aufnehmen.

Die beiden Laufwagenteile 88, 90 sind hier über einen Querträger 94 zu einem schienenübergreifenden Laufwagen verbunden. Am Querträger 94 ist das Gestänge 42 für das Führungselement 26 befestigt. Die Kette 20, die vorteilhafterweise wiederum so ausgebildet ist wie zuvor beschrieben, ist an einem Flansch 96 des Querträgers 94 angeschweißt, und zwar vorzugsweise mittig und oberhalb des Querträgers 94. In gleicher Weise wie zuvor beschrieben, wird die Kette 20 hier mit einem Elektromotor 44 über ein Reibrad 48 und eine Gegendruckrolle 50 angetrieben. Durch die beidseitig vom Führungsgitter 26 abgestützten Laufwagenteile 88, 90 ergibt sich dabei eine besonders stabile und laufruhige Konstruktion.

## Patentansprüche

1. Freilaufführungsanlage zum Trainieren von Tieren entlang einer definierten Laufbahn (12), insbesondere zum Trainieren von Pferden oder Kamelen, mit einer Anzahl von Führungselementen (26), die an einer Tragkonstruktion beweglich angeordnet sind, wobei eine Bewegungsbahn der Führungselemente (26) die Laufbahn (12) definiert, wobei die Tragkonstruktion zumindest eine feststehende Laufschiene (18; 80, 82) beinhaltet, an der zumindest ein Laufwagen (32; 88, 90) beweglich angeordnet ist, wobei die Führungselemente (26) mit dem zumindest einen Laufwagen (32; 88, 90) verbunden sind, wobei der zumindest eine Laufwagen (32; 88, 90) mit einem Zugelement (20) verbunden ist, wobei ein Antrieb (44) vorhanden ist, mit dem das Zugelement (20) bewegbar ist, und wobei das Zugelement (20) eine Kette mit einer Vielzahl von in sich steifen, jedoch gelenkig miteinander verbundenen Kettengliedern (22) ist, **dadurch gekennzeichnet, dass** die Kettenglieder (22) in Zugrichtung mit einer begrenzten Längsverschieblichkeit (68) zueinander verbunden sind.

2. Freilaufführungsanlage nach Anspruch 1, **dadurch gekennzeichnet, dass** zumindest eine der Anzahl der Führungselemente (26) entsprechende Anzahl von Laufwagen (32; 88, 90) an der Laufschiene (18; 80, 82) beweglich angeordnet ist, wobei jedes Führungselement (26) mit zumindest einem ihm zugeordneten Laufwagen (32; 88, 90) verbunden ist.

3. Freilaufführungsanlage nach Anspruch 1 oder 2, **dadurch gekennzeichnet, dass** die Tragkonstruktion zwei mit Abstand parallel zueinander verlaufende Laufschienen (80, 82) beinhaltet, an denen jeweils zumindest ein Laufwagenteil (88, 90) beweglich angeordnet ist, wobei die zumindest zwei Laufwagenteile (88, 90) mit einem Kopplungselement (94) zu einem schienenübergreifenden Laufwagen verbunden sind.

4. Freilaufführungsanlage nach Anspruch 3, **dadurch gekennzeichnet, dass** das Kopplungselement (94) das Führungselement (26) trägt.

5. Freilaufführungsanlage nach einem der Ansprüche 1 bis 4, **dadurch gekennzeichnet, dass** der Antrieb (44) feststehend ist.

6. Freilaufführungsanlage nach einem der Ansprüche 1 bis 5, **dadurch gekennzeichnet, dass** die Kettenglieder (22) Hohlprofil-Kettenglieder sind.

7. Freilaufführungsanlage nach einem der Ansprüche 1 bis 6, **dadurch gekennzeichnet, dass** die Kettenglieder (22) einen im wesentlichen rechteckförmigen Querschnitt besitzen.

8. Freilaufführungsanlage nach einem der Ansprüche 1 bis 7, **dadurch gekennzeichnet, dass** die einzelnen Kettenglieder (22) eine Länge im Bereich von etwa 0,2 m bis 5 m, bevorzugt im Bereich von etwa 3,5 m besitzen.

9. Freilaufführungsanlage nach einem der Ansprüche 1 bis 8, **dadurch gekennzeichnet, dass** die Kette (20) im Bereich ihrer Gelenkstellen (24) mit einer Vielzahl von Laufwagen (32; 88, 90) verbunden ist, wobei vorzugsweise an jeder Gelenkstelle (24) ein Laufwagen (32; 88, 90) befestigt ist.

10. Freilaufführungsanlage nach einem der Ansprüche 1 bis 9, **dadurch gekennzeichnet, dass** die Bewegungsbahn (12) der Führungselemente (26) eine umlaufende Bewegungsbahn mit zumindest streckenweise geradlinigen Abschnitten (13) ist.

## Claims

1. A Free-Reign Walking Machine for the training of animals along a defined training course (12), especially for the training of horses or camels, having a number of Moving-Guide-Components (26), that are moveably arranged on a supporting structure, wherein a track of travel of the Moving-Guide-Components (26) defines the training course (12), wherein the supporting structure comprises at least one fixed supporting rail (18; 80, 82), on which at least one traveler (32; 88, 90) is moveably arranged, and wherein the Moving-Guide-Components (26) are connected to the at least one traveler (32; 88, 90), wherein the at least one traveler (32; 88, 90) is connected to a pulling element (20), wherein a drive (44) capable of moving the pulling element (20) is provided, and wherein the pulling element (20) is a chain having a plurality of rigid chain links (22) which are pivotally connected to each other, **characterized in that** the chain links (22) are connected together with a limited longitudinal play (68) in pulling direction.

2. The Free-Reign Walking Machine according to claim 1, **characterized in that** a number of travelers (32; 88, 90) is arranged on the supporting rail (18; 80, 82), which number corresponds at least to the number of Moving-Guide-Components (26), wherein each Moving-Guide-Component (26) is connected to at least one traveler (32; 88, 90) associated therewith.

3. The Free-Reign Walking Machine according to claim 1 or 2, **characterized in that** the supporting structure comprises two supporting rails (80, 82) in parallel, on each of which at least one traveler part (88, 90) is moveably arranged, wherein the at least two traveler parts (88, 90) are connected to each other by a coupling element (94) to form a rail bridging traveler.

4. The Free-Reign Walking Machine according to claim 3, **characterized in that** the coupling element (94) carries the Moving-Guide-Component (26).

5. The Free-Reign Walking Machine according to anyone of claims 1 to 4, **characterized by** the drive (44) being in a fixed position.

6. The Free-Reign Walking Machine according to anyone of claims 1 to 5, **characterized in that** the chain links (22) are hollow-profile chain links.

7. The Free-Reign Walking Machine according to anyone of claims 1 to 6, **characterized in that** the chain links (22) have a substantially rectangular cross section.

8. The Free-Reign Walking Machine according to anyone of claims 1 to 7, **characterized in that** the individual chain links (22) are between about 0.2 m to about 5 m in length, preferably about 3.5 m.

9. The Free-Reign Walking Machine according to anyone of claims 1 to 8, **characterized in that** the chain (20) is connected to a plurality of travelers (32; 88, 90) in the area of its joint sections (24), preferably with a traveler (32; 88, 90) being connected at each joint section (24).

10. A Free-Reign Walking Machine according to anyone of claims 1 to 9, **characterized in that** the track of travel (12) of the Moving-Guide-Components (26) is a circulating course having straightaway sections (13) in at least some parts.

## Revendications

1. Installation de guidage de parcours pour l'entraînement d'animaux le long d'une piste définie (12), en particulier pour l'entraînement de chevaux ou de chameaux, avec un certain nombre d'éléments de guidage (26) qui sont disposés de manière mobile sur une construction de support, une bande de déplacement des éléments de guidage (26) définissant la piste (12), la construction de support comprenant au moins un rail de roulement fixe (18 ; 80, 82) sur lequel au moins un chariot (32 ; 88, 90) est disposé de manière mobile, les éléments de guidage (26) étant reliés à l'au moins un chariot (32 ; 88, 90), l'au moins un chariot (32 ; 88, 90) étant relié avec un élément de traction (20), un entraînement (44) avec lequel l'élément de traction (20) est déplaçable étant prévu et l'élément de traction (20) étant une chaîne avec une pluralité de maillons de chaîne (22) rigides, mais reliés les uns aux autres de manière articulée, **caractérisée en ce que** les maillons de chaîne (22) sont reliés les uns aux autres avec une mobilité longitudinale limitée (68) dans la direction de traction.

2. Installation de guidage de parcours selon la revendication 1, **caractérisée en ce qu'**un nombre de chariots (32 ; 88, 90) correspondant au moins au nombre d'éléments de guidage (26) est disposé de manière mobile sur le rail de roulement (18 ; 80, 82), chaque élément de guidage (26) étant relié avec au moins un des chariots (32 ; 88, 90) qui lui est associé.

3. Installation de guidage de parcours selon la revendication 1 ou 2, **caractérisée en ce que** la construction de support comporte deux rails de roulement (80, 82) s'étendant parallèlement et à distance l'un de l'autre, sur chacun desquels au moins une partie de chariot (88, 90) est placée de manière mobile, les au moins deux parties de chariot (88, 90) étant reliées à un élément d'accouplement (94) pour former un chariot s'engageant sur le rail.

4. Installation de guidage de parcours selon la revendication 3, **caractérisée en ce que** l'élément d'accouplement (94) porte l'élément de guidage (26).

5. Installation de guidage de parcours selon l'une quelconque des revendications 1 à 4, **caractérisée en ce que** l'entraînement (44) est fixe.

6. Installation de guidage de parcours selon l'une quelconque des revendications 1 à 5, **caractérisée en ce que** les maillons de chaîne (22) sont des maillons de chaîne en profilés creux.

7. Installation de guidage de parcours selon l'une quelconque des revendications 1 à 6, **caractérisée en ce que** les maillons de chaîne (22) ont une section transversale sensiblement rectangulaire.

8. Installation de guidage de parcours selon l'une quelconque des revendications 1 à 7, **caractérisée en ce que** les maillons de chaîne individuels (22) ont une longueur comprise entre environ 0,2 m et 5 m, de préférence dans une plage autour de 3,5 m.

9. Installation de guidage de parcours selon l'une quelconque des revendications 1 à 8, **caractérisée en ce que**, dans la zone de ses articulations (24), la chaîne (20) est reliée à une pluralité de chariots (32 ; 88, 90), un chariot (32 ; 88, 90) étant, de préférence, fixé à chaque articulation (24).

10. Installation de guidage de parcours selon l'une quelconque des revendications 1 à 9, **caractérisée en ce que** la bande de déplacement (12) des éléments de guidage (26) est une bande de déplacement formant une boucle avec des portions rectilignes (13) au moins par tronçons.
